# EUROPÄISCHE PATENTSCHRIFT

(11) **EP 4 109 185 B1**
(45) Veröffentlichungstag und Bekanntmachung des Hinweises auf die Patenterteilung: **08.04.2026**
(21) Anmeldenummer: 21181787.9
(22) Anmeldetag: 25.06.2021
(51) Int. Cl.: G05B 19/042, H04L 9/40, G06F 21/35

(54) **BEDIEN- UND ANZEIGEEINHEIT FÜR EIN FELDGERÄT**
OPERATING AND DISPLAY UNIT FOR A FIELD DEVICE
UNITÉ DE COMMANDE ET D'AFFICHAGE POUR UN APPAREIL DE TERRAIN

(43) Veröffentlichungstag der Anmeldung: 28.12.2022
(73) Patentinhaber: VEGA Grieshaber KG, 77709 Wolfach (DE)
(72) Erfinder: KASPAR, Stefan, 77716 Hofstetten (DE); BURGERT, Florian, 77723 Gengenbach (DE); LANGENSIEPEN, Christian, 79336 Herbolzheim (DE)
(74) Vertreter: Maiwald GmbH

(56) Entgegenhaltungen:
- WO-A1-2014/023468
- DE-A1- 19 525 685
- US-A1- 2013 136 263
- US-B1- 10 460 221

## Beschreibung

### Gebiet der Erfindung

Die Erfindung betrifft eine Bedien- und Anzeigeeinheit zur Identifizierung eines Feldgeräts, ein Feldgerät mit einer Bedien- und Anzeigeeinheit, ein Verfahren, eine Verwendung, ein Programmelement und ein computerlesbares Medium.

### Hintergrund

In der Prozess- und Fabrikautomation werden zur Überwachung und zur Steuerung von Prozessen Feldgeräte eingesetzt, welche beispielsweise mittels eines Typenschilds identifiziert werden. Solche Feldgeräte können beispielsweise zur Bestimmung eines Füllstands, Grenzstands oder eines Typs eines Füllmediums, und/oder zur Überwachung von weiteren Prozessparametern eingesetzt werden. Die Identifikation derartiger Feldgeräte kann beeinträchtigt sein, wenn das Typenschild - durch eine Beschädigung - schwerer oder nicht mehr lesbar ist.

WO 2014/023468 A1 offenbart ein Verfahren und ein Zugangskontrollsystem zur Autorisierung eines Nutzers durch ein tragbares Kommunikationsgerät an einem Feldgerät.

US 10 460 221 B1 offenbart ein Verfahren zum Anzeigen eines gesetzten, sich ständig aktualisierenden Identifikators in einem QR-Code und eine QR-Code-Anzeige- und Replay-Angriffsverhinderungsvorrichtung, die einen gesetzten, sich ständig aktualisierenden Identifikator anzeigt, der in einem QR-Code angezeigt wird.

US 2013/0136263 A1 offenbart ein System zur Registrierung eines persönlichen Computergeräts bei einem Dienstprozessor.

### Zusammenfassung

Es ist eine Aufgabe der Erfindung, eine Identifikation eines Feldgeräts zu verbessern.

Diese Aufgabe wird durch den Gegenstand der unabhängigen Patentansprüche gelöst. Weiterbildungen der Erfindung ergeben sich aus den Unteransprüchen und der folgenden Beschreibung.

Ein erster Aspekt betrifft eine Bedien- und Anzeigeeinheit zur Identifizierung eines Feldgeräts. Die Bedien- und Anzeigeeinheit weist ein internes Register auf, welches zum Speichern einer Identifikation des Feldgeräts eingerichtet ist. Die Identifikation des Feldgeräts kann ausschließlich im Feldgerät gespeichert sein; alternativ oder zusätzlich kann die Identifikation auf einem Server, einer Datenbank und/oder auf einem anderen elektronischen Gerät und/oder Medium gespeichert sein, und/oder z.B. als Plakette auf dem Gerät. Die Identifikation des Feldgeräts kann beispielsweise mittels einer Seriennummer und/oder weiterer Identifikationsmerkmale ausgeführt sein bzw. unterstützt werden. Die Bedien- und Anzeigeeinheit weist ein internes Register auf. Das interne Register kann z.B. als nicht-volatiler Speicher ausgeführt sein, z.B. als Flash-Speicher, als WORM-Speicher (WORM: Write Once Read Many), wie z.B. EEPROM (Electrically Erasable Programmable Read Only Memory), EPROM (Erasable Programmable Read-Only Memory) und/oder als unveränderlicher Speicher, z.B. als PROM (Programmable Read-Only Memory). Das interne Register kann weiterhin beispielsweise einen Authentifizierungscode umfassen, z.B. einen Private Key. Das Einlesen der Registerinhalte kann z.B. mittels einer Kamera erfolgen, z.B. durch Einlesen eines Typenschilds. Das Typenschild kann z.B. einen QR-Code und/oder einen Barcode umfassen.

Ferner weist die Bedien- und Anzeigeeinheit eine Darstellungseinheit auf, welche zu einer kodierten Darstellung der Identifikation eingerichtet ist. Die kodierte Darstellung kann z.B. als eine Klarschrift kodiert sein, als zumindest teilweise verschlüsselte Anzeige, als ein Barcode, QR-Code (QR: "Quick Response" Code) und/oder in einer anderen Darstellung. Die Darstellungseinheit kann beispielsweise als ein Display ausgeführt sein. Die Darstellungseinheit kann z.B. als blinkende LED ausgeführt sein, welche ein Leuchtsignal - z.B. in Form einer Sequenz wie in einem Morsealphabet oder einer anderen Kodierung - aussendet. Weiterhin kann die Darstellungseinheit als Nahfeldkommunikations-Modul ausgeführt sein, welche das kodierte Signal z.B. mittels einer RFID (Radio-Frequency Identification) aussendet. Die Darstellungseinheit kann eine Recheneinheit beinhalten, die z.B. zum Kodieren der Identifikation dient.

Die kodierte Darstellung der Identifikation umfasst ein Identifizierungsmerkmal und ein Authentifizierungsmerkmal. Die kodierte Darstellung der Identifikation kann z.B. mittels einer Rechen- und Steuereinheit ermittelt werden, die Teil der Darstellungseinheit und/oder des Feldgeräts sein kann. Die kodierte Darstellung kann ein erstes allgemein lesbares Feld, beispielsweise eine Seriennummer und einen Typ des Feldgeräts, enthalten, sowie ein weiteres Feld, das ggf. von einem Steuergerät einer Zweileiterschleife ausgewertet werden kann, d.h. zur Kommunikation mit dem Feldgerät. Zumindest ein Teil der kodierten Darstellung der Identifikation kann eine verschlüsselte Darstellung sein. Die kodierte Darstellung kann z.B. immer, beim Hochfahren und/oder auf Anforderung auf dem Display erscheinen. In zumindest einigen Fällen kann nur die Seriennummer dargestellt sein. In einigen Fällen kann die kodierte Darstellung nach einer vordefinierten Zeit wieder gelöscht werden. Vorteilhaftweise kann die Identifikation des Feldgeräts immer angezeigt werden, z.B. in Verbindung mit einer Niedrigenergieanzeige wie z.B. e-Paper. Dies kann vorteilhafterweise dazu beitragen, dass die Identifikation des Feldgeräts öfter (z.B. immer) und/oder besser lesbar ist, z.B. im Vergleich zu einer Plakette an dem Gerät.

Die Bedien- und Anzeigeeinheit kann z.B. ein Display umfassen, das mit einem Feldgerät verbunden werden kann. Damit kann z.B. ein QR-Code des Typenschildes des Feldgeräts wiedergegeben werden. Das Display kann den QR-Code oder eine andere Darstellung oder Kodierung des jeweiligen Gerätes, auf dem es montiert ist, anzeigen. Dieser QR-Code kann z.B. gemäß einer Norm - z.B. DIN SPEC 91406:2019-12 "Automatische Identifikation von physischen Objekten und Informationen zum physischen Objekt in IT-Systemen, insbesondere loT-Systemen; Text Deutsch und Englisch" - auf dem Typenschild dargestellt sein. Der QR-Code im Display kann eine Verbindung des Gerätes zu einem sogenannten "digitalen Zwilling" herstellen, z.B. dadurch, dass der QR-Code einen Link erhält zur einer Dokumentation, Parametersetting, Historie, Firmware, Prüfprotokollen, Zeichnungen, Gerätezustand, etc. des Feldgeräts. Ferner kann der QR-Code im Display verwendet werden, um eine Autorisierung für einen Gerätezugang ("Login") zu erhalten.

Ein weiterer Vorteil der vorliegenden Offenbarung kann sich aus einer sicheren Authentifizierung auf dem Feldgerät ergeben. In einem Fall, wenn das Feldgerät eine Schnittstelle zum Fernzugriff hat, kann der QR-Code im Display z.B. als Indikator dienen, dass der Anwender sich sehr nahe am Gerät - z.B. in Sichtweite des Geräts - befindet. Dies kann vorteilhafterweise ein Risiko einer Einwahl und/oder Authentifizierung auf dem falschen Gerät verringern.

Gemäß einer weiteren Ausführungsform ist das Authentifizierungsmerkmal zur Authentifizierung eines Benutzergeräts eingerichtet. Das Benutzergerät kann beispielsweise ein mobiles Gerät sein, z.B. ein Smartphone, Tablet oder Laptop.

Gemäß einer weiteren Ausführungsform ist das Authentifizierungsmerkmal veränderlich. Beispielsweise kann das Authentifizierungsmerkmal als eine oder mittels einer Nonce und/oder anderweitig kodiert werden. Das veränderliche Authentifizierungsmerkmal kann ausschließlich im Feldgerät gespeichert sein; alternativ oder zusätzlich kann die Identifikation auf einem Server, einer Datenbank und/oder auf einem anderen elektronischen Gerät und/oder Medium gespeichert sein. Das Authentifizierungsmerkmal kann sich zur Erhöhung der Sicherheit nach jedem Verbindungsaufbau ändern. Beispielsweise kann der QR-Code aus Sicherheitsgründen dynamisch angepasst werden.

Gemäß einer weiteren Ausführungsform ist die Identifikation des Feldgeräts mittels der Darstellungseinheit über eine Entfernung zwischen 0 m und 2 m, insbesondere zwischen 0 m und 0,5 m, beispielsweise zwischen 0 m und 20 cm, empfangbar.

Das kann dazu beitragen, dass das Feldgerät nur über eine kurze Entfernung, d.h. in einem Nahbereich, identifiziert werden kann. Ein erster Vorteil dieser Ausführungsform ist die Erstellung eines Blickkontaktes, d.h. einer klaren Zuordnung zwischen dem Feldgerät und dem steuernden Gerät. Bei einem zweiten Vorteil dieser Ausführungsform handelt es sich darum, dass dadurch, dass das Feldgerät nur im Nahbereich identifiziert werden kann, und so nicht versehentlich ein anderes Gerät gesteuert wird.

Gemäß einer weiteren Ausführungsform ist die Darstellungseinheit als ein Display, als ein Nahfeldkommunikations-Modul, als ein Leuchtsignal und/oder anders ausgeführt. Der Begriff "Display" ist breit zu verstehen. Das Display kann z.B. ein LCD (Flüssigkristallanzeige)-Display, elektronisches Papier (e-Paper), ein LED (Leuchtdiode)-Display, z.B. im sichtbaren oder Infrarot-Bereich, und/oder eine andere Darstellung sein. Bei dem Leuchtsignal kann es sich alternativ oder zusätzlich z.B. um eine blinkende LED handeln. Es kann sich als vorteilhaft erweisen, dass es durch die Nahbereichsidentifikation des Feldgeräts, welche einen Blickkontakt mit dem Feldgerät fördert, vermieden wird, dass ein falsches Feldgerät bedient wird. Als weiterer Vorteil kann es berücksichtigt werden, dass nur autorisierte Personen das Feldgerät bedienen können.

Die kodierte Information kann auch in Form eines 1D-Codetyps (z.B. Code128) oder 2D-Codetyps (z.B. DataMatrix) generiert und auf dem Display angezeigt werden. Alternativ zu einem QR-Code kann die Übertragung der Information über Nahbereichsfunktechnologien wie NFC (NFC: Near Field Communication), RFID (Radio-Frequency Identification), Bluetooth und/oder weitere ausgeführt werden.

Gemäß der Erfindung ist die Darstellungseinheit als Teil einer lösbar verbundenen Einheit des Feldgeräts und/oder als Teil eines externen Anzeigegeräts ausgeführt. Beispielsweise kann die Darstellungseinheit steckbar direkt an dem Feldgerät und/oder über die Zweileiterschleife verbunden angeordnet sein.

Der QR-Code kann auch vorteilhafterweise auf einer externen Anzeigeeinheit angezeigt werden, z.B. wenn das Gerät an einer unzugänglichen Stelle angebracht ist. Beispielsweise kann ein externes Anzeigegerät verwendet werden, z.B. VEGADIS 81 oder VEGADIS 82 der Firma VEGA. Eine lösbar verbundene Anzeigeeinheit ist einfach austauschbar, z.B. zwischen den Feldgeräten. Damit kann vorteilhafterweise eine korrekte Anzeige der Identifikation in einem gewohnten Format angegeben werden. Die lösbar verbundene Anzeigeeinheit kann z.B. steckbar, aufschraubbar, mittels eines Bajonettverschlusses verbunden, etc. auf dem Feldgerät ausgeführt werden.

Gemäß einer weiteren Ausführungsform ist die Bedien- und Anzeigeeinheit als Teil eines Geräts ausgeführt, das in einer Zweileiterschleife angeordnet ist.

Durch die Zweileiterschleife ist das Gerät zumindest indirekt mit einem Server und/oder einer Datenbank verbunden. Die Verbindung mittels Zweileiterschleife kann zur Realisierung der Authentifizierung des Benutzergeräts genutzt werden.

Gemäß einer Ausführungsform weist die Bedien- und Anzeigeeinheit ein Kommunikationsmodul auf, welches zur Authentifizierung des Benutzergeräts und/oder zur Kommunikation mit dem Benutzergerät eingerichtet ist. Das Kommunikationsmodul kann z.B. als Funkmodul ausgeführt sein, das zur Kommunikation zwischen dem Feldgerät und dem Benutzergerät geeignet ist. Das Einlesen der Registerinhalte kann zumindest teilweise über eine Kamera erfolgen, die z.B. auf das Typenschild des Geräts gerichtet werden kann.

Ein Aspekt der vorliegenden Offenbarung betrifft ein Feldgerät, welches eine Bedien- und Anzeigeeinheit und/oder eine Darstellungseinheit aufweist.

Ein Aspekt betrifft ein Verfahren zur Darstellung einer Identifikation eines Feldgeräts. Das Verfahren weist folgende Schritte auf:
Bereitstellen der Identifikation in einem internen Register des Feldgeräts;
Kodieren der Identifikation in ein Identifizierungsmerkmal und ein Authentifizierungsmerkmal; Darstellen der kodierten Identifikation mittels einer Darstellungseinheit, wobei die kodierte Darstellung der Identifikation das Identifizierungsmerkmal und das Authentifizierungsmerkmal umfasst.

Ziel dieses Verfahrens ist das Identifizieren des Feldgeräts, z.B. für eine eindeutige Zuordnung zwischen z.B. dem Feldgerät und dem Steuergerät.

Gemäß einer Ausführungsform werden die folgenden Schritte ausgeführt:
Erfassen, mittels einer Erfassungseinheit in einem mobilen Gerät des Identifizierungsmerkmals und/oder des Authentifizierungsmerkmals;
Übertragen des Identifizierungsmerkmals und/oder des Authentifizierungsmerkmals auf einen Server;
Authentifizieren einer Kommunikation zwischen dem Feldgerät und dem mobilen Gerät.

Die Erfassungseinheit kann in einem mobilen Gerät angeordnet sein, z.B. in einem Smartphone, das z.B. eine Kamera bzw. Nahfeldkommunikations-Modul und/oder ein spezielles Bluetooth-Modul beinhaltet. Beim Server kann es sich sowohl um ein Programm als auch um ein Gerät, z.B. Leitstand, Speisemodul, handeln. Beim Server kann es sich auch um eine Leitwarte und Steuermodul der Zweileiterschleife handeln. Die Authentifizierung kann mehrere Ebenen aufweisen, z.B. von einer niedrigen Ebene "nur Messwerte auslesen", über "Wartung", etc., bis hin zu "Admin".

Gemäß einer Ausführungsform erfolgt das Bereitstellen der Identifikation bei der Herstellung des Feldgeräts mittels einer Übertragung in einer Zweileiterschleife und/oder mittels einer Erfassungseinheit. Die Erfassungseinheit kann beispielsweise eine Kameraeinheit sein, die zum Erfassen eines QR-Codes des Geräts oder der Nahfeldkommunikation eingerichtet ist.

Ein Aspekt betrifft die Verwendung einer Bedien- und Anzeigeeinheit eines Feldgeräts zur Darstellung einer Identifikation des Feldgeräts und/oder zur Authentifizierung eines Benutzergeräts.

Ein Aspekt betrifft ein Programmelement, das, wenn es auf einem Feldgerät, einem mobilen Gerät, einem Server und/oder auf einer anderen Recheneinheit ausgeführt wird, das Feldgerät, das mobile Gerät, den Server und/oder die Recheneinheit anweist, die oben und im Folgenden beschriebenen Verfahrensschritte durchzuführen. Beispielsweise kann das Programmelement als eine App auf mindestens einem dieser Geräte ausgeführt sein.

Ein Aspekt betrifft ein computerlesbares Medium, auf dem ein oben beschriebenes Programmelement gespeichert ist.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen.

### Kurze Beschreibung der Figuren

Dabei zeigt:
**Fig. 1** schematisch die Identifizierung eines Feldgeräts auf einem Server.
**Fig. 2a** schematisch eine Bedien- und Anzeigeeinheit mit einem Steuer- und Speisemodul der Zweileiterschleife gemäß einer Ausführungsform.
Fig. 2b schematisch eine Bedien- und Anzeigeeinheit mit einem Steuer- und Speisemodul der Zweileiterschleife gemäß einer weiteren Ausführungsform.
Fig. 3a schematisch eine Bedien- und Anzeigeeinheit gemäß einer Ausführungsform in perspektivischer Ansicht.
Fig. 3b schematisch eine Bedien- und Anzeigeeinheit gemäß einer Ausführungsform in perspektivischer Ansicht.
Fig. 3c schematisch eine Bedien- und Anzeigeeinheit gemäß einer Ausführungsform in perspektivischer Ansicht.
Fig. 4 ein Flussdiagramm eines Verfahrens gemäß einer Ausführungsform.

### Detaillierte Beschreibung von Ausführungsformen

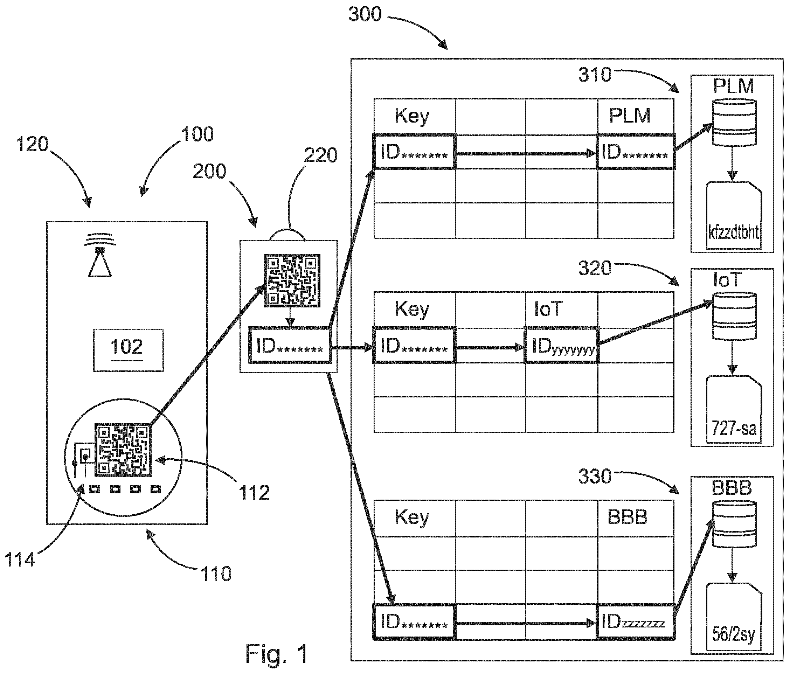

Fig. 1 zeigt schematisch die Identifizierung eines Feldgeräts 100 auf einem Server 300, mittels Übertragung eines Identifizierungsmerkmals und/oder eines Authentifizierungsmerkmals des Feldgeräts 100 zwischen einer Bedien- und Anzeigeeinheit 110, einer Erfassungseinheit 220 eines Benutzergeräts 200 und einem Server 300. Die Bedien- und Anzeigeeinheit 110 weist ein internes Register 102 auf, welches zum Speichern einer Identifikation des Feldgeräts 100 eingerichtet ist. Die Identifikation des Feldgeräts 100 kann beispielsweise als eine Seriennummer oder als ein weiteres Identifikationsmerkmal ausgeführt sein. Das interne Register 102 kann beispielsweise als nicht-volatiler Speicher ausgeführt sein, z.B. als Flash-Speicher, als WORM-Speicher (WORM: Write Once Read Many, wie z.B. EEPROM, EPROM, etc.) und/oder als unveränderlicher Speicher. Das interne Register 102 kann weiterhin beispielsweise einen Authentifizierungscode umfassen, z.B. einen Private Key. Das Einlesen der Registerinhalte kann über eine Erfassungseinheit 220 des Benutzergeräts 200 erfolgen, beispielsweise durch Einlesen des Typenschilds. Bei der Erfassungseinheit 220 kann es sich um eine Kamera handeln.

Ferner weist die Bedien- und Anzeigeeinheit 110 eine Darstellungseinheit 112 auf, welche zu einer kodierten Darstellung der Identifikation eingerichtet ist. Die Darstellungseinheit 112 kann beispielsweise als ein Display ausgeführt sein. Die Darstellungseinheit 112 kann als blinkende LED, welche ein Leuchtsignal sendet, ausgeführt sein. Weiterhin kann die Darstellungseinheit 112 ein Nahfeldkommunikations-Modul 114 umfassen. Die Darstellungseinheit 112 kann eine Recheneinheit beinhalten, die z.B. zum Kodieren der Identifikation dient. Die kodierte Darstellung der Identifikation umfasst ein Identifizierungsmerkmal und ein Authentifizierungsmerkmal. Die kodierte Darstellung der Identifikation kann z.B. mittels einer Rechen- und Steuereinheit, die Teil der Darstellungseinheit 112 und/oder des Feldgeräts 100 sein kann, ermittelt werden. Die kodierte Darstellung kann ein erstes allgemein lesbares Feld, z.B. Seriennummer und Typ des Feldgeräts, enthalten, sowie ein zweites Feld, das ggf. von einem Steuergerät einer Zweileiterschleife ausgewertet wird, d.h. zur Kommunikation mit dem Feldgerät. Zumindest ein Teil der kodierten Darstellung der Identifikation kann eine verschlüsselte Darstellung sein.

Im LCD-Display 112 kann z.B. der QR-Code des Typenschildes des Feldgerätes 100 wiedergegeben werden. Das Display 112 kann den QR-Code des jeweiligen Feldgerätes 100 zeigen, auf dem es montiert ist.

Ferner weist die Bedien- und Anzeigeeinheit 110 ein Kommunikationsmodul 120 auf. Das Kommunikationsmodul 120 kann zur Authentifizierung des Benutzergeräts 200 und/oder zur Kommunikation mit dem Benutzergerät 200 eingerichtet sein. Das Kommunikationsmodul 120 kann z.B. als ein Funkmodul ausgeführt sein. Das Funkmodul 120 kann zur Kommunikation zwischen dem Feldgerät 100, dem Benutzergerät 200 und/oder dem Server 300 dienen.

Das Authentifizierungsmerkmal kann veränderlich sein. Beispielsweise kann das Authentifizierungsmerkmal als eine Nonce und/oder anderweitig kodiert sein. Das Authentifizierungsmerkmal kann sich zur Erhöhung der Sicherheit nach jedem Verbindungsaufbau ändern.

Bei einem Identifizierungsmerkmal und/oder einem Authentifizierungsmerkmal in dieser Ausführungsform handelt es sich um einen QR-Code des Typenschildes des Feldgeräts 100. Der QR-Code kann sich zur Erhöhung der Sicherheit nach jedem Verbindungsaufbau ändern und kann dynamisch angepasst werden. Beispielweise kann das Benutzergerät 200 ein mobiles Gerät sein, z.B. Smartphone, Tablet, Laptop.

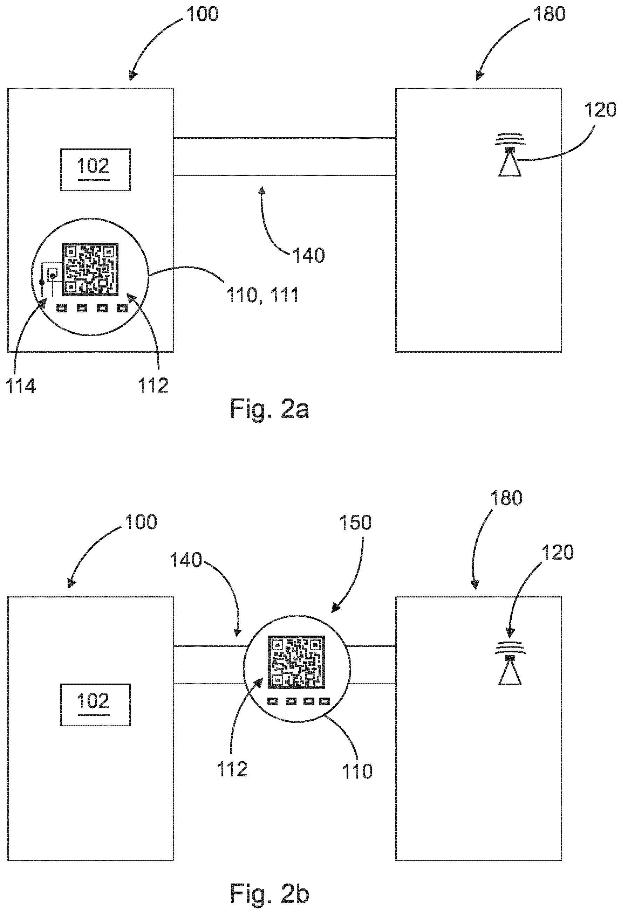

Beim Server 300 kann es sich sowohl um ein Programm als auch um ein Gerät, z.B. eine Leitstand, ein Steuer- und/oder Speisemodul einer Zweileiterschleife, usw., handeln, z.B. der Zweileiterschleife in der **Fig. 2a** oder **Fig. 2b****.**

Auf dem Server 300 können unterschiedliche Datenbanken gespeichert werden, welche die Identifikation des Feldgerätes in einem Backend-System erlauben. Das Bezugszeichen 310 bezeichnet eine Identifikation des Feldgerätes 100 in einem PLM-System (PLM: Product Lifecycle Management). 320 bezeichnet eine Identifikation des Feldgerätes 100 in einem loT-System (loT: Internet of Things). Der QR-Code kann die Identifikation des Feldgeräts zu einem digitalen Zwilling (Dokumentation, Parametersetting, Historie, Firmware, Prüfprotokolle, Zeichnungen, Gerätezustand) in eine Datenbank. Beispielsweise erlaubt der Standard der Kodierung DIN SPEC 91406:2019-12 "Automatische Identifikation von physischen Objekten und Informationen zum physischen Objekt in IT-Systemen, insbesondere loT-Systemen; Text Deutsch und Englisch", physikalische Objekte eindeutig über einen in einem QR-Code abgelegten Link zur Identifikation zu realisieren. 310 bezeichnet eine Identifikation des Feldgerätes 100 in einem BBB-System (BBB: BigBlueButton, ein Open-Source-Webkonferenzsystem).

**Fig. 2a** zeigt ein Feldgerät 100 mit einer Bedien- und Anzeigeeinheit 110 gemäß einer weiteren Ausführungsform. Die Darstellungseinheit 112, 114 ist als Teil einer lösbar verbundenen Einheit 111 des Feldgeräts 100 ausgeführt. Vorteilhaftweise ist die lösbar verbundene Einheit 111 austauschbar zwischen den Feldgeräten ausgeführt. Die lösbare Einheit erlaubt die korrekte Anzeige in einem gewohnten für das Feldgerätformat, z.B. DIN SPEC 91406:2019-12. Die lösbare Einheit 111 kann z.B. steckbar mittels Anschlüssen 105 oder aufschraubbar mittels Kontakten 108 befestigt sein.

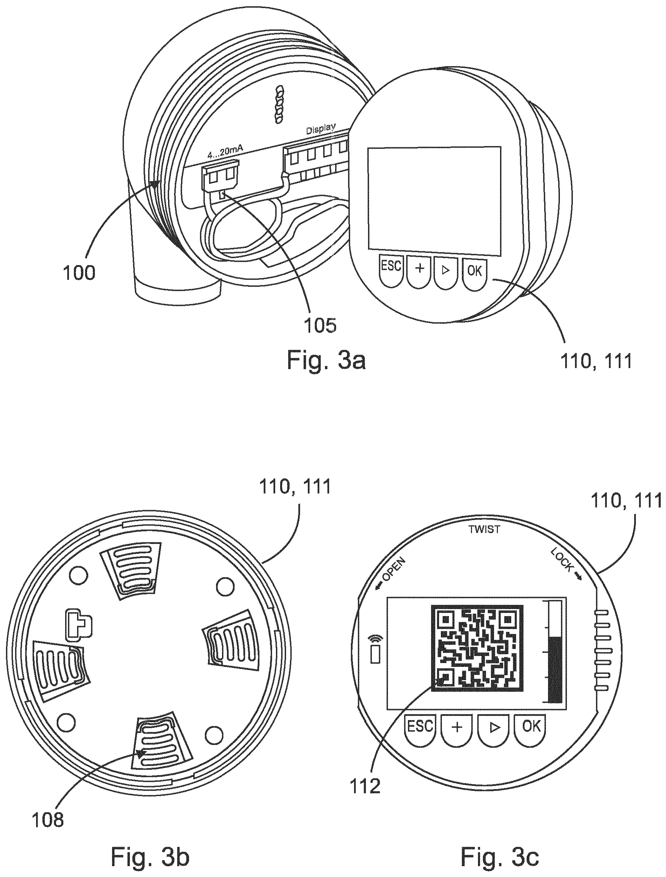

**Fig. 3a** zeigt eine Ausführungsform, in welcher das Feldgerät 100 mittels elektrischer Anschlüsse 105 mit der Bedien- und Anzeigeeinheit 110 verbunden ist. Es wird deutlich, dass diese Bedien- und Anzeigeeinheit 110 als eine lösbare Einheit 111 ausgeführt ist.

**Fig. 3b** zeigt eine Ausführungsform, in welcher die lösbare Einheit 111 elektrische Kontakte 108, die mit den Anschlüssen 105 auf dem Feldgerät korrespondieren, zur Befestigung auf dem Feldgerät 100 umfasst.

**Fig. 3c** zeigt eine Ausführungsform, in welcher die Darstellungseinheit 112 als ein LCD-Display oder als e-Paper ausgeführt ist. Die Darstellungseinheit 112 zeigt als Beispiel einen QR-Code dient zur Identifikation des Feldgerätes. Der QR-Code kann z.B. als "Sperr- oder Ruhebildschirm" ausgeführt sein, der gezeigt wird, wenn z.B. keine Darstellung eines Messwerts und/oder weiterer Werte stattfindet.

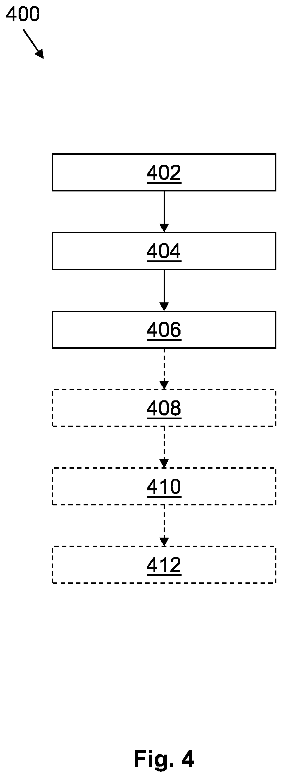

**Fig. 4** zeigt ein Flussdiagram eines Verfahrens zur Darstellung einer Identifikation eines Feldgeräts gemäß einer Ausführungsform der vorliegenden Offenbarung. In einem Schritt S1 wird eine Identifikation in einem internen Register 102 des Feldgeräts 100 bereitgestellt. In einem Schritt S2 wird die Identifikation in ein Identifizierungsmerkmal und in ein Authentifizierungsmerkmal kodiert. In einem Schritt S3 wird die kodierte Identifikation mittels einer Darstellungseinheit 112 dargestellt, wobei die kodierte Darstellung der Identifikation das Identifizierungsmerkmal und das Authentifizierungsmerkmal umfasst. Die Darstellungseinheit 112 kann eine Recheneinheit beinhalten, die z.B. zum Kodieren der Identifikation dient. In diesem Verfahren wird eine eindeutige Zuordnung zwischen z.B. dem Feldgerät und dem Steuergerät durchgeführt.

In einem optionalen Schritt S4 wird mittels einer Erfassungseinheit 220 in einem mobilen Gerät 200 das Identifizierungsmerkmal und/oder das Authentifizierungsmerkmal erfasst. In einem optionalen Schritt S5 wird das Identifizierungsmerkmal und/oder das Authentifizierungsmerkmal auf einen Server 300 übertragen. In einem optionalen Schritt S6 wird eine Kommunikation zwischen dem Feldgerät 100 und dem mobilen Gerät 200 authentifiziert. Die Authentifizierung kann mehrere Ebenen aufweisen, z.B. Ebene "nur Messwerte auslesen", über "Wartung", "Admin", etc.

Das Bereitstellen der Identifikation des Feldgeräts 100 in einem internen Register 102 kann bei Herstellung des Feldgeräts 100 ausgeführt werden. Das Bereitstellen der Identifikation des Feldgeräts kann mittels einer Übertragung in einer Zweileiterschleife 140 und/oder mittels einer Erfassungseinheit 220 erfolgen. Die Erfassungseinheit 220 kann beispielsweise eine Kameraeinheit sein, die zum Erfassen eines QR-Codes des Feldgeräts dient. Die Erfassungseinheit kann ein Nahfeldkommunikations-Modul erfassen, z.B. einen RFID-Chip oder eine Antenne der Bluetooth-Technologie.

### Liste der Bezugszeichen

- 100: Feldgerät
- 102: internes Register
- 105: Anschlüsse für eine Bedien- und Anzeigeeinheit
- 108: Kontakte einer Bedien- und Anzeigeeinheit
- 110: Bedien- und Anzeigeeinheit
- 111: lösbar verbundene Einheit
- 112: Darstellungseinheit, Display
- 114: Darstellungseinheit, Nahfeldkommunikation
- 120: Kommunikationsmodul
- 140: Zweileiterschleife
- 150: externes Anzeigegerät
- 180: Steuer- und Speisemodul der Zweileiterschleife
- 200: Benutzergerät, mobiles Gerät
- 220: Erfassungseinheit
- 300: Server
- S1 - S6: Schritte

## Patentansprüche

1. Bedien- und Anzeigeeinheit (110) zur Identifizierung eines Feldgeräts (100), aufweisend:
ein internes Register (102), eingerichtet zum Speichern einer Identifikation des Feldgeräts (100); und
eine Darstellungseinheit (112, 114), eingerichtet zu einer kodierten Darstellung der Identifikation,
wobei die Darstellungseinheit (112, 114) wahlweise als Teil einer lösbar verbundenen Einheit (111) des Feldgeräts (100) und/oder als Teil eines externen Anzeigegeräts (150) ausgeführt ist,
**dadurch gekennzeichnet, dass** die kodierte Darstellung der Identifikation ein Identifizierungsmerkmal und ein Authentifizierungsmerkmal umfasst.

2. Bedien- und Anzeigeeinheit (110) nach Anspruch 1,
wobei das Authentifizierungsmerkmal zur Authentifizierung eines Benutzergeräts (200) eingerichtet ist.

3. Bedien- und Anzeigeeinheit (110) nach Anspruch 2,
wobei das Authentifizierungsmerkmal veränderlich ist.

4. Bedien- und Anzeigeeinheit (110) nach einem der vorhergehenden Ansprüche,
wobei die Identifikation des Feldgeräts (100) mittels der Darstellungseinheit (112, 114) über eine Entfernung zwischen 0 m und 2 m, insbesondere zwischen 0 m und 0,5 m, beispielsweise zwischen 0 m und 20 cm, empfangbar ist.

5. Bedien- und Anzeigeeinheit (110) nach einem der vorhergehenden Ansprüche,
wobei die Darstellungseinheit (112, 114) als ein Display (112), als eine Nahfeldkommunikation (114) und/oder als ein Leuchtsignal ausgeführt ist.

6. Bedien- und Anzeigeeinheit (110) nach einem der vorhergehenden Ansprüche,
wobei die Bedien- und Anzeigeeinheit (110) als Teil eines Geräts ausgeführt ist, das in einer Zweileiterschleife (140) angeordnet ist.

7. Bedien- und Anzeigeeinheit (110) nach einem der vorhergehenden Ansprüche, weiterhin aufweisend ein Kommunikationsmodul (120), wobei das Kommunikationsmodul (120) zur Authentifizierung des Benutzergeräts (200) und/oder zur Kommunikation mit dem Benutzergerät (200) eingerichtet ist.

8. Feldgerät (100), aufweisend eine Bedien- und Anzeigeeinheit (110) und/oder eine Darstellungseinheit (112, 114) nach einem der vorhergehenden Ansprüche.

9. Verfahren zur Darstellung einer Identifikation eines Feldgeräts (100), das Verfahren aufweisend die Schritte:
bereitstellen der Identifikation, in einem internen Register (102) des Feldgeräts (100);
kodieren der Identifikation in ein Identifizierungsmerkmal und ein Authentifizierungsmerkmal; und
darstellen der kodierten Identifikation mittels einer Darstellungseinheit (112, 114) nach einem der Ansprüche 1 bis 7, wobei die kodierte Darstellung der Identifikation das Identifizierungsmerkmal und das Authentifizierungsmerkmal umfasst.

10. Verfahren nach Anspruch 9, weiterhin aufweisend die Schritte:
erfassen, mittels einer Erfassungseinheit (220) in einem mobilen Gerät (200), des Identifizierungsmerkmals und/oder des Authentifizierungsmerkmals;
übertragen des Identifizierungsmerkmals und/oder des Authentifizierungsmerkmals auf einen Server (300); und
authentifizieren einer Kommunikation zwischen dem Feldgerät (100) und dem mobilen Gerät (200).

11. Verfahren nach Anspruch 9 oder 10,
wobei das Bereitstellen der Identifikation bei der Herstellung des Feldgeräts (100), mittels einer Übertragung in einer Zweileiterschleife (140) und/oder mittels einer Erfassungseinheit (220) erfolgt.

12. Verwendung einer Bedien- und Anzeigeeinheit (110) nach einem der Ansprüche 1 bis 7 eines Feldgeräts (100) zur Darstellung einer Identifikation des Feldgeräts (100) und/oder zur Authentifizierung eines Benutzergeräts (200).

13. Programmelement, welches, wenn es auf einem Feldgerät (100), einem mobilen Gerät (200), einem Server (300) und/oder auf einer anderen Recheneinheit ausgeführt wird, das Feldgerät (100), das mobile Gerät (200), den Server (300) und/oder die Recheneinheit anweist, das Verfahren nach Anspruch 9, 10 oder 11 durchzuführen.

14. Computerlesbares Medium, auf dem ein Programmelement nach dem vorhergehenden Anspruch gespeichert ist.

## Claims

1. An operating and display unit (110) for identifying a field device (100), comprising:
an internal register (102), configured to store an identification of the field device (100); and
a display unit (112, 114), configured to display the identification in coded form,
wherein the display unit (112, 114) is selectively designed as part of a detachably connected unit (111) of the field device (100) and/or as part of an external display device (150),
**characterised in that** the coded representation of the identification comprises an identification feature and an authentication feature.

2. The operating and display unit (110) according to claim 1,
wherein the authentication feature is configured to authenticate a user device (200).

3. The operating and display unit (110) according to claim 2,
wherein the authentication feature is variable.

4. The operating and display unit (110) according to one of the preceding claims, wherein the identification of the field device (100) can be received, by means of the display unit (112, 114), over a distance between 0 m and 2 m, in particular between 0 m and 0.5 m, for example between 0 m and 20 cm.

5. The operating and display unit (110) according to one of the preceding claims, wherein the display unit (112, 114) is designed as a display (112), as a near-field communication (114) and/or as a light signal.

6. The operating and display unit (110) according to one of the preceding claims,
wherein the operating and display unit (110) is designed as part of a device arranged in a two-wire loop (140).

7. The operating and display unit (110) according to one of the preceding claims, further comprising a communication module (120), wherein the communication module (120) is configured to authenticate the user device (200) and/or to communicate with the user device (200).

8. A field device (100) comprising an operating and display unit (110) and/or a display unit (112, 114) according to one of the preceding claims.

9. A method for displaying an identification of a field device (100), the method comprising the steps of:
providing the identification, in an internal register (102) of the field device (100);
encoding the identification into an identification feature and an authentication feature; and
displaying the encoded identification by means of a display unit (112, 114) according to one of claims 1 to 7, wherein the encoded display of the identification comprises the identification feature and the authentication feature.

10. The method according to claim 9, further comprising the steps of:
capturing, by means of a capture unit (220) in a mobile device (200), the identification feature and/or the authentication feature;
transmitting the identification feature and/or the authentication feature to a server (300); and
authenticating communication between the field device (100) and the mobile device (200).

11. The method according to claim 9 or 10,
wherein providing the identification during the manufacture of the field device (100) is done by means of a transmission in a two-wire loop (140) and/or by means of a detection unit (220).

12. Use of an operating and display unit (110) according to one of claims 1 to 7 of a field device (100) for displaying an identification of the field device (100) and/or for authenticating a user device (200).

13. A programme element which, when executed on a field device (100), a mobile device (200), a server (300) and/or on another computing unit, instructs the field device (100), the mobile device (200), the server (300) and/or the computing unit to perform the method according to claim 9, 10 or 11.

14. A computer-readable medium on which a program element according to the preceding claim is stored.

## Revendications

1. Unité de commande et d'affichage (110) pour identifier un appareil de terrain (100), présentant :
un registre interne (102) conçu pour stocker une identification de l'appareil de terrain (100) ; et
une unité de représentation (112, 114) conçue pour une représentation codée de l'identification,
l'unité de représentation (112, 114) étant réalisée sélectivement sous la forme d'une partie d'une unité (111) reliée de manière amovible à l'appareil de terrain (100) et/ou sous la forme d'une partie d'un dispositif d'affichage externe (150),
**caractérisée en ce**
**que** la représentation codée de l'identification comprend une caractéristique d'identification et une caractéristique d'authentification.

2. Unité de commande et d'affichage (110) selon la revendication 1,
dans laquelle la caractéristique d'authentification est conçue pour authentifier un appareil utilisateur (200).

3. Unité de commande et d'affichage (110) selon la revendication 2,
dans laquelle la caractéristique d'authentification est variable.

4. Unité de commande et d'affichage (110) selon l'une des revendications précédentes,
dans laquelle l'identification de l'appareil de terrain (100) peut être reçue au moyen de l'unité de représentation (112, 114) sur une distance comprise entre 0 m et 2 m, en particulier entre 0 m et 0,5 m, par exemple entre 0 m et 20 cm.

5. Unité de commande et d'affichage (110) selon l'une des revendications précédentes,
dans laquelle l'unité de représentation (112, 114) est réalisée sous la forme d'un afficheur (112), d'une communication en champ proche (114) et/ou d'un signal lumineux.

6. Unité de commande et d'affichage (110) selon l'une des revendications précédentes,
dans laquelle l'unité de commande et d'affichage (110) est réalisée sous la forme d'une partie d'un appareil qui est disposé dans une boucle à deux fils (140).

7. Unité de commande et d'affichage (110) selon l'une des revendications précédentes, présentant en outre un module de communication (120), le module de communication (120) étant conçu pour authentifier l'appareil utilisateur (200) et/ou pour communiquer avec l'appareil utilisateur (200).

8. Appareil de terrain (100) présentant une unité de commande et d'affichage (110) et/ou une unité de représentation (112, 114) selon l'une des revendications précédentes.

9. Procédé pour représenter une identification d'un appareil de terrain (100), le procédé comprenant les étapes consistant à :
fournir l'identification dans un registre interne (102) de l'appareil de terrain (100) ;
coder l'identification en une caractéristique d'identification et une caractéristique d'authentification ; et
représenter l'identification codée au moyen d'une unité de représentation (112, 114) selon l'une des revendications 1 à 7, la représentation codée de l'identification comprenant la caractéristique d'identification et la caractéristique d'authentification.

10. Procédé selon la revendication 9, présentant en outre les étapes consistant à :
détecter, au moyen d'une unité de détection (220) dans un appareil mobile (200), la caractéristique d'identification et/ou la caractéristique d'authentification ;
transmettre la caractéristique d'identification et/ou la caractéristique d'authentification à un serveur (300) ; et
authentifier une communication entre l'appareil de terrain (100) et l'appareil mobile (200).

11. Procédé selon la revendication 9 ou 10,
dans lequel la fourniture de l'identification lors de la fabrication de l'appareil de terrain (100) s'effectue au moyen d'une transmission dans une boucle à deux fils (140) et/ou au moyen d'une unité de détection (220).

12. Utilisation d'une unité de commande et d'affichage (110) selon l'une des revendications 1 à 7 d'un appareil de terrain (100) pour représenter une identification de l'appareil de terrain (100) et/ou pour authentifier un appareil utilisateur (200).

13. Élément de programme qui, lorsqu'il est exécuté sur un appareil de terrain (100), un appareil mobile (200), un serveur (300) et/ou une autre unité de calcul, amène l'appareil de terrain (100), l'appareil mobile (200), le serveur (300) et/ou l'unité de calcul à mettre en œuvre le procédé selon les revendications 9, 10 ou 11.

14. Support lisible par ordinateur sur lequel est stocké un élément de programme selon la revendication précédente.
